(19) Europäisches Patentamt
European Patent Office
Office européen des brevets

(11) **EP 1 926 612 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(21) Anmeldenummer: **06791947.2**

(22) Anmeldetag: **09.09.2006**

(51) Int Cl.:
*B60G 17/016* (2006.01)　　*B60G 17/018* (2006.01)

(86) Internationale Anmeldenummer:
**PCT/EP2006/008797**

(87) Internationale Veröffentlichungsnummer:
**WO 2007/031243 (22.03.2007 Gazette 2007/12)**

(54) **REGELUNGSVERFAHREN FÜR ELEKTRONISCH GEREGELTE DÄMPFUNGSSYSTEME IN FAHRZEUGEN UND ELEKTRONISCH GEREGELTES DÄMPFUNGSSYSTEM**

CONTROL METHOD FOR ADJUSTING ELECTRONICALLY CONTROLLED DAMPING SYSTEM IN MOTOR VEHICLES AND AN ELECTRONICALLY CONTROLLED DAMPING SYSTEM

PROCEDE DE REGLAGE POUR SYSTEMES D'AMORTISSEMENT A REGLAGE ELECTRONIQUE DANS DES VEHICULES, ET SYSTEME D'AMORTISSEMENT A REGLAGE ELECTRONIQUE CORRESPONDANT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.09.2005　DE 102005043555**

(43) Veröffentlichungstag der Anmeldung:
**04.06.2008 Patentblatt 2008/23**

(73) Patentinhaber: **GM Global Technology Operations LLC**
**Detroit, MI 48265-3000 (US)**

(72) Erfinder:
• **HARDER, Michael**
**55294 Bodenheim (DE)**
• **RÖDDER, Mike**
**51570 Windeck (DE)**

(74) Vertreter: **Strauss, Peter**
**Adam Opel AG**
**Patentrecht, A0-02**
**65423 Rüsselsheim (DE)**

(56) Entgegenhaltungen:
**EP-A- 1 623 856　　EP-A2- 0 215 315**
**DE-A1- 4 436 441　　DE-A1- 19 640 820**

**Beschreibung**

Die vorliegende Erfindung liegt auf dem Gebiet der Kraftfahµrzeugtechnik und betrifft insbesondere ein Regelungsverfahren für elektronisch geregelte Dämpfungssysteme in Fahrzeugen, sowie ein elektronisch geregeltes Dämpfungssystem hierfür.

Moderne Kraftfahrzeuge sind oftmals bereits serienmäßig mit einem elektronisch geregelten Dämpfungssystem ausgerüstet, durch welches das Dämpfungsverhalten von regelbaren Schwingungsdämpfern (beispielsweise Rad führende Federbeine) an den Radaufhängungen geregelt werden kann. Genauer umfasst ein solches geregeltes Dämpfungssystem meist drei am Fahrzeugaufbau angebrachte Sensoren, durch welche eine Geschwindigkeit des als starre Platte angenommenen Fahrzeugaufbaus relativ zum Fahrwerk in einer zur Fahrbahnoberfläche senkrechten (vertikalen) Richtung erfasst werden kann. Weiterhin sind die Schwingungsdämpfer jeweils mit Sensoren versehen, durch welche eine (vertikale) Auf- und Abbewegung bzw. entsprechende Geschwindigkeiten der Fahrzeugräder erfasst werden können. Die verschiedenen Sensoren übertragen die erfassten Geschwindigkeitsdaten an eine Steuer- und Regeleinheit des Dämpfungssystems, welche ihrerseits mit Stellgliedern der regelbaren Schwingungsdämpfer in Wirkverbindung steht. In der Steuer- und Regeleinheit werden anhand der Geschwindigkeitsdaten der Sensoren vertikale Bewegungen bzw. Geschwindigkeiten des Fahrzeugaufbaus relativ zum Fahrwerk mit vertikalen Geschwindigkeiten der Räder an den Radaufhängungen verglichen, wobei sich aus den jeweiligen Differenzen die Geschwindigkeiten beim Ein-/Ausfedern der Schwingungsdämpfer ergeben. Aus diesen Daten wird dann mittels eines Kennfelds ein Stellwert für die Stellglieder der Schwingungsdämpfer ermittelt und an die Stellglieder übertragen, wodurch ein gewünschtes Dämpfungsverhalten der Schwingungsdämpfer an den Radaufhängungen erreicht werden kann. Um eine an eine jewelige Fahrsituation möglichst gut angepasste Regelung des Dämpfungssystems zu erzielen, sind meist weitere Sensoren zur Erfassung der Fahrzeuggeschwindigkeit, der Fahrzeugquerbeschleunigung (z. B. durch Einsatz eines Lenkwinkelsensors) und der Fahrzeugquerbeschleunigungsänderung (z. B. durch Einsatz eines Lenkwinkelsprungsensors) vorgesehen.

Ziel einer jeden geregelten Fahrzeugdämpfung ist es, das Schwingverhalten eines Fahrzeugaufbaus, also die Art und Weise in der sich der Fahrzeugaufbau gegenüber dem Fahrwerk bei einer Anregung durch die Fahrbahn (Fahrbahnunebenheiten) bewegt, in einer gewünschten Weise zu beeinflussen. Gewünscht ist hierbei im Allgemeinen eine Bewegung, bei der die Vorderachse und die Hinterachse des Fahrzeugs möglichst in gleicher Weise mit einer gleichen Amplitude ausgelenkt werden und möglichst gleichzeitig wieder zur Ruhe kommen, so dass der Fahrzeugaufbau als solcher keine oder möglichst geringe Nick- oder Wankbewegungen vollführt.

Nachteilig bei herkömmlichen Dämpfungssystemen in Fahrzeugen ist jedoch, dass eine sich ändernde Zuladung des Fahrzeugs nur sehr beschränkt Einfluss auf die in herkömmlichen Dämpfungssystemen erfasste Geschwindigkeit des Fahrzeugaufbaus relativ zum Fahrwerk hat. Insofern kann ein Hemmen von Nick- und Wankbewegungen des Fahrzeugaufbaus im Rahmen der Kennfeldsteuerung bislang lediglich auf einen bestimmten Referenzzustand abgestimmt werden, nämlich entweder für ein leeres Fahrzeug oder ein Fahrzeug, bei dem eine gewisse Beladung mit Personen und/oder Ladefracht angenommen wird. Aus diesem Grund bieten die herkömmlichen Dämpfungssysteme in Fahrzeugen bislang keine Möglichkeit unterschiedliche Beladungszustände des Fahrzeugs, wie sie in der praktischen Verwendung des Fahrzeugs jedoch sehr häufig auftreten können, zu berücksichtigen und eine Hemmung von Schwingungen des Fahrzeugaufbaus bei unterschiedlichen Beladungszuständen zu optimieren.

So ist auch aus der Praxis bekannt, dass bei großen Fahrzeugzuladungen jenseits einer für den Fahrzeugreferenzzustand der Kennfeldsteuerung angenommenen Zuladung durch eine auf die Achsen ungleichmäßig einwirkende Last eine permanente Unterdämpfung der Schwingungsdämpfer insbesondere der Fahrzeughinterachse auftreten kann, welche in nachteiliger Weise zu Nickbewegungen des Fahrzeugaufbaus führt, die durch das elektronische Dämpfungssystem nur bedingt dämpfbar sind und zudem einen verhältnismäßig großen Regelaufwand verursachen. Grundsätzlich kann ein Schwingungsdämpfer Bewegungen nicht vollständig vermeiden, da nur die Bewegung selbst eine Dämpfwirkung erzeugt. Dieses Problem einer die Achsen ungleichmäßig belastenden Zuladung verschärft sich noch bei Fahrzeugen mit vergleichsweise geringem Eigengewicht, da sich hier die Zuladung im Vergleich zu einem an sich schwereren Fahrzeug stärker auswirkt.

Nickbewegungen sind jedoch schon deshalb nicht vollständig vermeidbar, da die Vorderachse und die Hinterachse ein Hindernis immer zeitversetzt passieren. (In der Praxis lässt man ohnehin einen gewissen Rest an Nickbewegung zu, da eine zu starke Kompensation zu einem "stössigen", unkomfortablen Schwingverhalten und Abrollen führt.) Durch Zuladung wird diese stets vorhandene "Rest-Nickbewegung" vergrößert, was zu einem unangenehmen Fahrverhalten führt. Falls die vom Hersteller begrenzte Zuladung überschritten wird, kann das Fahrverhalten auch unkontrollierbar werden.

Die deutsche Patentanmeldung DE 196 40 820A beschreibt ein Verfahren gemäß dem Oberbegriff von Patentanspruch 1.

Demnach besteht eine Aufgabe der vorliegenden Erfindung darin, ein Verfahren zur achslast- bzw. beladungsabhängigen Regelung eines elektronisch geregelten Dämpfungssystems in einem Fahrzeug bzw. ein solches Dämpfungssystem zur Verfügung zu stellen, mit dem eine Hemmung/Dämpfung von Schwingungen, insbesondere Nickschwingungen, des Fahrzeugaufbaus, die insbesondere durch eine die Achsen ungleichmäßig belastende Beladung verursacht sind, für verschiedene Beladungen des Fahrzeugs optimiert werden kann.

Diese Aufgabe wird nach dem Vorschlag der Erfindung durch ein Regelungsverfahren für ein elektronisch regelbares Dämpfungssystem in einem Fahrzeug bzw. ein Dämpfungssystem mit den Merkmalen der unabhängigen Ansprüche gelöst. Vorteilhafte Ausgestaltungen der Erfindung sind durch die Merkmale der Unteransprüche angegeben.

Erfindungsgemäß ist ein Verfahren zur achslast- bzw. beladungsabhängigen Regelung eines elektronisch geregelten Dämpfungssystems in einem Fahrzeug, insbesondere Kraftfahrzeug, bzw. ein elektronisch geregeltes Dämpfungssystem gezeigt. Das elektronisch geregelte Dämpfungssystem umfasst hierbei wenigstens einen elektronisch regelbaren Schwingungsdämpfer (z. B. in Form eines Rad tragenden Federbeins) mit einem elektronisch regelbaren Stellglied zur Einstellung seines Dämpfverhaltens (bzw. Dämpfwirkung). Das Dämpfverhalten kann beispielsweise durch eine härtere oder weichere Dämpfungs-Kennlinie des Schwingungsdämpfers ausgedrückt sein. Der Schwingungsdämpfer ist an einer Radaufhängung des Fahrzeugs angeordnet, wobei im Allgemeinen an jeder Radaufhängung des Fahrzeugs elektronisch regelbare Schwingungsdämpfer vorgesehen sind. Das elektronisch geregelte Dämpfungssystem umfasst weiterhin eine mit den Stellgliedern der Schwingungsdämpfer in Wirkverbindung stehende Steuer- und Regeleinheit zur Steuerung/Regelung des Dämpfverhaltens der regelbaren Schwingungsdämpfer, wobei zu diesem Zweck Stellgrößen von der Steuer- und Regeleinheit an die Stellglieder der Schwingungsdämpfer übertragen werden. Die Schwingungsdämpfer sind ihrerseits mit Sensoren ausgerüstet, durch welche eine Geschwindigkeit beim Ein-/Ausfedern der Schwingungsdämpfer erfasst werden kann. Zudem kann durch solche Sensoren im Allgemeinen die axiale Länge eines Schwingungsdämpfers entlang des Ein-/Ausfederwegs erfasst werden. Ferner können in einem solchen erfindungsgemäßen Dämpfungssystem weitere Sensoren zur Erfassung einer Fahrzeuggeschwindigkeit, einer Fahrzeugquerbeschleunigung (z. B. durch Einsatz eines Lenkwinkelsensors) und einer Fahrzeugquerbeschleunigungsänderung (z. B. durch Einsatz eines Lenkwinkelsprungsensors) vorgesehen sein.

Das erfindungsgemäße Verfahren zur achslast- bzw. beladungsabhängigen Regelung eines wie oben beschriebenen elektronisch geregelten Dämpfungssystems in einem Fahrzeug zeichnet sich nun in wesentlicher Weise dadurch aus, dass wenigstens eine mit verschiedenen Achslastzuständen einer Achse (z. B. Hinterachse) des Fahrzeugs (anders ausgedrückt Fahrzeugbeladungszustände) variierende Kenngröße ermittelt wird und auf Basis dieser Kenngröße eine Stellgröße für das Stellglied wenigstens eines Schwingungsdämpfers bestimmt wird, welche zur Einstellung eines gewünschten Dämpfverhaltens an das Stellglied übertragen wird. Im Allgemeinen werden hierbei Stellgrößen für die Stellglieder aller Schwingungsdämpfer einer jeweiligen Fahrzeugachse ermittelt und an deren Stellglieder übertragen, um so für alle Schwingungsdämpfer einer Fahrzeugachse ein gewünschtes Dämpfverhalten einzustellen.

In einem Kraftfahrzeug, welches heckseitig beladen werden kann, wodurch sich die Achslast der Hinterachse im Vergleich zur Achslast der Vorderachses relativ zum Leerzustand stärker ändert, wird somit typisch eine jeweilige Stellgröße für die Schwingungsdämpfer aller Radaufhängungen der Hinterachse ermittelt und an deren Stellglieder zur Einstellung eines gewünschen Dämpfverhaltens übermittelt. Bei einer besonders vorteilhaften Ausgestaltung der Erfindung werden jeweilige Stellgrößen zusätzlich zu den Schwingungsdämpfern der Hinterachse auch für die Schwingungsdämpfer der Radaufhängungen der Vorderachse ermittelt und an deren Stellglieder zur Einstellung eines gewünschen Dämpfverhaltens übermittelt. Auf diese Weise kann die absolute Zuladung und deren Verteilung auf die Vorder- und Hinterachse ermittelt werden, so dass nicht nur das Schwingverhalten, sondern auch eine absolute Fahrzeugaufbaubewegung auf das Niveau eines Fahrzeugreferenzzustands (z. B. Fahrzeugleerzustand), wie er in der Kennfeldsteuerung eines herkömmlichen Dämpfungssystems festgelegt wird, gebracht werden kann. Die Fahrzeugbewegung ist somit unabhängig von der Beladung, d. h. für verschiedene Zuladungen, abstimmbar (optimierbar).

In dem erfindungsgemäßen Verfahren wird die mit verschiedenen Achslastzuständen des Fahrzeugs variierende Kenngröße auf Basis einer Eigenfrequenz von Schwingungen des Fahrzeugaufbaus ermittelt, da sich gezeigt hat, dass eine variierende Beladung auf die Größe der Hubbewegung (Wegstrecke) beim Ein- bzw. Ausfedern der Schwingungsdämpfer und die Eigenfrequenz des Fahrzeugaufbaus vergleichsweise (z. B. verglichen mit der herkömmlich erfassten Geschwindigkeit der Schwingungen des Fahrzeugaufbaus) großen Einfluss hat und somit gut erfasst werden kann. Bei einer möglichen Ausgestaltung dieser Ausführungsform kann die Eigenfrequenz des Fahrzeugaufbaus auf Basis eines zeitlichen Abstands erfasster maximaler Schwingungsamplituden des Fahrzeugaufbaus relativ zum Fahrwerk ermittelt werden. Bei einer weiteren möglichen Ausgestaltung dieser Ausführungsform kann die Eigenfrequenz des Fahrzeugaufbaus auf Basis eines zeitlichen Abstands erfasster maximaler Geschwindigkeiten von Schwingungen des Fahrzeugaufbaus relativ zum Fahrwerk ermittelt werden, welche lediglich phasenverschoben zu den Maximalamplituden der Schwingungen sind. Zu diesem Zweck können die ohnehin in herkömmlichen Dämpfungssystemen vorhandenen Sensoren zur Erfassung von Geschwindigkeiten des Fahrzeugaufbaus, wie eingangs beschrieben, eingesetzt werden. Gleichwohl können weitere Sensoren angeordnet sein bzw. die vorhandenen Sensoren mit weiteren Funktionen, etwa zur Erfassung der Maximalamplitude einer Schwingung des Fahrzeugaufbaus, versehen sein.

Bei einer weiteren vorteilhaften Ausführungsform des erfindungsgemäßen Verfahrens wird die mit verschiedenen Achslastzuständen des Fahrzeugs variierende Kenngröße auf Basis eines erfassten Höhenstandswerts des Fahrzeugaufbaus ermittelt. Ein solcher Höhenstandswert des Fahrzeugaufbaus wird gewöhnlich von einer Höhenstandsregelvorrichtung des Fahrzeugaufbaus bereit gestellt, wie sie heutzutage beispielsweise bei mit Xenon-Licht ausgerüsteten Fahrzeugen ohnehin vorhanden ist, da der Gesetzgeber bei Xenon-Licht eine automatische Leuchtweitenregulierung vorgeschreibt. Gleichwohl kann das Fahrzeug zusätzlich oder alternativ mit einem oder mehreren entsprechender Sensoren zur Erfassung eines Höhenstandswerts des Fahrzeugaufbaus ausgestattet sein.

In dem erfindungsgemäßen elektronisch geregelten Dämpfungssystem in einem Fahrzeug, insbesondere Kraftfahrzeug, ist zum Zweck der erfindungsgemäßen achslastabhängigen Regelung des Dämpfverhaltens von Schwingungsdämpfern eine Kenngrößenermittlungseinheit vorgesehen, an welche die von den jeweiligen Sensoren erfassten Daten als Eingangsdaten zugeführt und auf Basis dieser Eingangsdaten die mit verschiedenen Achslastzuständen des Fahrzeugs variierende Kenngröße auf Basis einer Eigenfrequenz von Schwingungen des Fahrzeugaufbaus ermittelt wird. Diese Kenngrößenermittlungseinheit kann hierbei in der Steuer- und Regeleinheit des Dämpfungssystems integriert sein. Die von der Kenngrößenermittlungseinheit ermittelten Kenngrößen werden als Eingangssignal an die Steuer- und Regeleinheit des Dämpfungssystems übertragen, welche ihrerseits auf Basis der Kenngrößen Stellgrößen für die Stellglieder der Schwingungsdämpfer für eine gewünschte Einstellung des Dämpfverhaltens bei variierender Achslast erstellt und an die Schwingungsdämpfer überträgt.

Die Erfindung erstreckt sich ferner auf ein Fahrzeug, insbesondere Kraftfahrzeug, welches mit einem wie oben beschriebenen elektronisch geregelten Dämpfungssystem ausgerüstet ist, mit welchem ein wie oben beschriebenes Regelungsverfahren durchgeführt werden kann.

Die Erfindung wird nun anhand eines Ausführungsbeispiels näher erläutert, wobei Bezug auf die beigefügte Zeichnung genommen wird. Die beigefügte

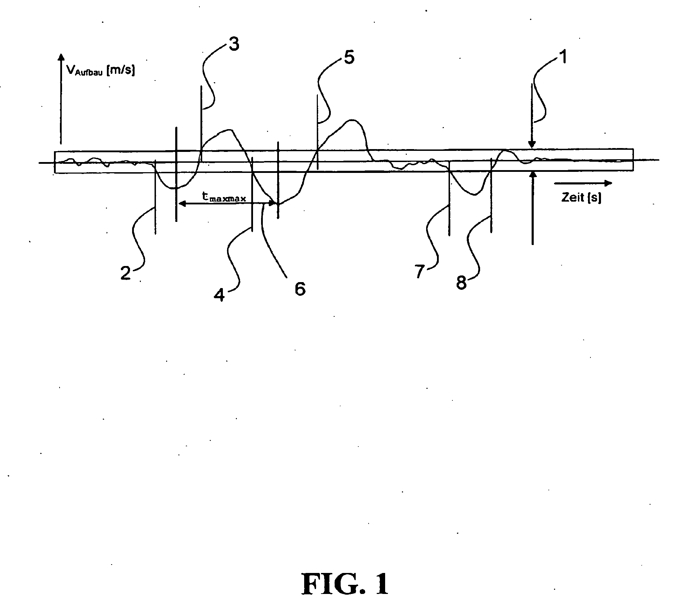

Fig. 1    zeigt eine schematische Darstellung eines Geschwindigkeit/Zeit-Diagramms in dem erfindungsgemäßen Dämpfungssystem zur Erfassung einer Eigenfrequenz des Fahrzeugaufbaus.

Es wird nun Bezug auf die Figur 1 genommen, worin anhand einer schematischen Darstellung eines Geschwindigkeit/Zeit-Diagramms die Geschwindigkeit von Schwingungen des Fahrzeugaufbaus relativ zum Fahrwerk veranschaulicht ist. Die Eigenfrequenz des Fahrzeugaufbaus wird hierbei mithilfe von am Fahrzeugaufbau und/oder an den Schwingungsdämpfern angeordneten Geschwingigkeitssensoren erfasst, wobei die abgelaufene Zeit als Abszisse, die Geschwindigkeit des Fahrzeugaufbaus bei einer Bewegung in einer vertikalen Richtung relativ zum Fahrwerk als Ordinate aufgetragen ist.

In dem Ausführungsbeispiel wird zugleich die Geschwindigkeit des Fahrzeugsaufbaus an der Vorderachse und an der Hinterachse erfasst, wobei in der Kenngrößenermittlungseinheit eine selektive Bewertung der Daten erfolgt. Damit nicht jede noch so kleine Änderung einer Geschwindigkeit des Fahrzeugaufbaus zu einer Änderung des Dämpfverhaltens führt, wird ein "Totband" 1 eingeführt, das symmetrisch um einen Nulldurchgang angeordnete Schwellwerte für die Geschwindigkeit der vertikalen Auf- und Abbewegung des Fahrzeugaufbaus definiert, so dass lediglich die Schwellwerte übersteigende Geschwindigkeiten des Fahrzeugaufbaus für eine Regelung des Dämpfungsverhaltens der Schwingungsdämpfer berücksichtigt werden. In dem gezeigten Beispiel wird bei einem ersten Verlassen des Totbands durch Unterschreiten des unteren Schwellwerts etwa bei einer vertikalen Abwärtsbewegung des Fahrzeugaufbaus, gekennzeichnet durch den senkrechten Strich mit der Bezugszahl 2, ein als eine elektronische Schaltung in der Kenngrößenermittlungseinheit realisierter "Beobachter".gestartet. Nach einer Umkehr der Bewegungsrichtung und einem Wiedereintritt der Geschwindigkeit des Fahrzeugaufbaus in den Bereich des Totbands 1 wird nach einem einmaligen Nulldurchgang der obere Schwellwert des Totbands 1 überschritten, gekennzeichnet durch den senkrechten Strich mit der Bezugszahl 3, gefolgt von einer erneuten Umkehr der Bewegungsrichtung und einem Wiedereintritt in das Totband 1 und einem Unterschreiten des unteren Schwellwerts nach einmaligem Nulldurchgang, gekennzeichnet durch einen senkrechten Strich mit der Bezugszahl 4, dann gefolgt von einem Wiedereintritt in das Totband 1 und einem Überschreiten des oberen Schwellwerts nach einmaligem Nulldurchgang, gekennzeichnet durch einen senkrechten Strich mit der Bezugszahl 5. Wird durch den Beobachter festgestellt, dass das Geschwindigkeitssignal einen der Schwellwerte des Totbands 1 passiert, ohne mehr als lediglich einen einzigen Nulldurchgang zu haben, so wird ein Zeitindex des letzten Maximums durch den Beobachter festgehalten. Nach Erfassung zweier solcher aufeinander folgender Maxima (bzw. wie in Fig. 1 dargestellt: drei hintereinander auftretende Ereignisse der Art: Austritt/Eintritt/einmaliger Nulldurchlauf des Totbands) wird der Beobachter beendet. Aus dem zeitlichen Abstand $t_{maxmax}$ der registrierten aufeinanderfolgenden Maxima mit gleichem Vorzeichen der Geschwindigkeiten des Fahrzeugaufbaus kann in einfacher Weise das Verhältnis einer Eigenfrequenz einer Schwingung des Fahrzeugaufbaus mit Beladung zu einer Eigenfrequenz einer Schwingung des Fahrzeugaufbaus eines wählbaren Fahrzeugreferenzzustands (z. B. Leerzustand ohne Beladung) bestimmt werden. Dabei wird das Verhältnis aus der bestimmten Zeit $t_{maxmax}$ zu einer zum Fahrzeugreferenzzustand gehörenden Referenzzeit $t_{ref}$ gebildet:

$$f_{Beladung} = t_{maxmax}/t_{ref}$$

Der sich ergebende Faktor $f_{beladung}$ entspricht einem Wert 1 im Referenzzustand (z. B. Leerzustand ohne Beladung) und verändert sich bei Beladung. Ob die Eigenfrequenz bei Beladung kleiner oder größer wird, hängt vom Verlauf der Federrate der Fahrzeugtragfeder zwischen Achse und Fahrzeugaufbau über den Einfederweg ab. Der Zusammenhang zwischen dem Faktor $f_{Beladung}$ und der Zuladung ist aber charakteristisch für jeden Fahrzeugtyp.

Der so ermittelte Faktor $f_{Beladung}$ wird über einen längeren Zeitraum gelernt. Dabei wird der Mittelwert der bisher registrierten Faktoren gebildet. Ist eine hinreichend große Datenbasis erreicht, wird mit dem berechneten Faktor eine Ausgleichskraft für die Schwingungsdämpfer der Hinterachse und gegebenenfalls der Vorderachse durch die Kenngrößenermittlungseinheit errechnet und nach Ermittlung jeweiliger Stellgrößen durch die Steuer- und Regeleinheit an die Stellglieder der Schwingungsdämpfer übertragen. Die jeweils ältesten Faktoren entfallen für neu hinzukommende Faktoren bei der Mittelwertbildung im Sinne eines Schiebepuffers, so dass eine geschlossene Regelschleife vorliegt. Zur Verdeutlichung ist in Fig. 1 noch der Fall dargestellt, dass der Beobachter gestartet wird, gekennzeichnet durch den senkrechten Strich mit der Bezugszahl 7, wobei dem Maximum der Geschwindigkeit nach einer Umkehr der Bewegungsrichtung und einem Wiedereintritt (Bezugszahl 8) in das Totband 1 jedoch mehrere Nulldurchgänge folgen, so dass der Beobachter wieder rückgesetzt wird.

Das in Fig. 1 gezeigte Ausführungsbeispiel ist lediglich zur Veranschaulichung der Erfindung gedacht und soll die Erfindung in keiner Weise einschränken.

In der vorliegenden Erfindung kann ein durch Beladung hervorgerufenes nicht-paralleles Schwingverhalten der Vorder- und Hinterachsen des Fahrzeugs kompensiert werden. Dazu wird aus den Sensordaten bzw. den daraus berechneten Signalen eine Kenngröße ermittelt, die den Beladungszustand beschreibt. Dieses Signal dient dann als Basis für die Berechnung zusätzlicher Kräfte, um Zustände erhöhter Beladung adäquat zu bedämpfen. Diese Beladungskräfte werden den normalen Kräften zugeschlagen, die dann auf einen Referenzzustand, z. B. den Leergewichtszustand, optimiert werden können. Auf diese Weise kann das insbesondere an der Hinterachse auftrende "Pumpen" bzw. "Tauchen" vermieden und Puffereinsätze in Anzahl und Härte reduziert werden.

Bezugszeichenliste

1 Totband
2 Start Beobachter
3 Austritt aus Totband nach Nulldurchgang
4 Austritt aus Totband nach Nulldurchgang
5 Ende Beobachter
6 Zeitintervall aufeinander folgender Maxima
7 Start Beobachter

**Patentansprüche**

1. Verfahren zur achslastabhängigen Regelung eines elektronisch geregelten Dämpfungssystems in einem Fahrzeug, insbesondere Kraftfahrzeug, welches wenigstens einen Schwingungsdämpfer mit elektronisch regelbarem Stellglied zur Einstellung eines Dämpfverhaltens des Schwingungsdämpfers an wenigstens einer Radaufhängung des Fahrzeugs und eine mit dem Stellglied in Wirkverbindung stehende Steuer- und Regeleinheit zur Steuerung/Regelung des Dämpfverhaltens des regelbaren Schwingungsdämpfers aufweist, welches die Schritte umfasst:

   - Ermittlung wenigstens einer mit verschiedenen Achslastzuständen einer Achse des Fahrzeugs variierenden Kenngröße,
   - Ermittlung einer Stellgröße für das Stellglied des Schwingungsdämpfers auf Basis der Kenngröße,
   - Übertragung der Stellgröße an das Stellglied des Schwingungsdämpfers zur Einstellung eines Dämpfverhaltens des Schwingungsdämpfers **dadurch gekennzeichnet, dass** die mit verschiedenen Achslastzuständen des Fahrzeugs variierende Kenngröße auf Basis einer Eigenfrequenz von Schwingungen des Fahrzeugaufbaus ermittelt wird.

2. Verfahren nach Anspruch 1,
   **dadurch gekennzeichnet, dass** die Eigenfrequenz des Fahrzeugaufbaus auf Basis eines zeitlichen Abstands erfasster maximaler Schwingungsamplituden des Fahrzeugaufbaus ermittelt wird.

3. Verfahren nach Anspruch 1,
   **dadurch gekennzeichnet, dass** die Eigenfrequenz des Fahrzeugaufbaus auf Basis eines zeitlichen Abstands erfasster maximaler Geschwindigkeiten von Schwingungen des Fahrzeugaufbaus ermittelt wird.

4. Verfahren nach einem der Ansprüche 1 bis 3,
   **dadurch gekennzeichnet, dass** eine mit verschiedenen Achslastzuständen einer Vorderachse und einer Hinterachse des Fahrzeugs variierende Kenngröße ermittelt wird.

5. Verfahren nach Anspruch 1, **dadurch gekennzeichnet, dass** die mit verschiedenen Achslastzuständen einer Achse des Fahrzeugs variierende Kenngröße auf Basis eines erfassten Höhenstandswerts des Fahrzeugaufbaus relativ zum Fahrwerk ermittelt wird.

6. Elektronisch geregeltes Dämpfungssystem in einem Fahrzeug, insbesondere Kraftfahrzeug, welches wenigstens einen Schwingungsdämpfer mit elektronisch regelbarem Stellglied zur Einstellung eines Dämpfverhaltens des Schwingungsdämpfers an wenigstens einer Radaufhängung des Fahrzeugs und eine mit dem Stellglied in Wirkverbindung stehende Steuer- und Regeleinheit zur Steuerung/Regelung des Dämpfverhaltens des regelbaren Schwingungsdämpfers aufweist, **dadurch gekennzeichnet, dass** es mit einer Kenngrößenermittlungseinheit zur Ermittlung einer mit verschiedenen Achslastzuständen des Fahrzeugs variierenden Kenngröße auf Basis einer Eigenfrequenz von Schwingungen des Fahrzeugaufbaus ausgerüstet ist.

7. Elektronisch geregeltes Dämpfungssystem nach Anspruch 6, **dadurch gekennzeichnet, dass** die Kenngrößenermittlungseinheit zur Ermittlung einer mit verschiedenen Achslastzuständen des Fahrzeugs variierenden Kenngröße in der Steuer- und Regeleinheit des Dämpfungssystems integriert ist.

8. Fahrzeug, insbesondere Kraftfahrzeug, welches mit einem elektronisch geregelten Dämpfungssystem nach einem der Ansprüche 6 bis 7 ausgerüstet ist.

**Claims**

1. A method for the regulation, as a function of axle load, of an electronically regulated damping system in a vehicle, in particular a motor vehicle, which has at least one vibration damper having an electronically variable actuator for setting a damping behavior of the vibration damper on at least one wheel suspension of the vehicle and a control and regulating unit, which is operationally linked to the actuator, for controlling/regulating the damping behavior of the variable vibration damper, which comprises the following steps:

   - ascertaining at least one parameter which varies with various axle load states of an axle of the vehicle,
   - ascertaining a control variable for the actuator of the vibration damper on the basis of the parameter,
   - transmitting the control variable to the actuator of the vibration damper to set a damping behavior of the vibration damper **characterized in that** the parameter, which varies with various axle load states of the vehicle, is ascertained on the basis of a natural frequency of vibrations of the vehicle body.

2. The method according to Claim 1, **characterized in that** the natural frequency of the vehicle body is ascertained on the basis of a time interval of detected maximum vibration amplitudes of the vehicle body.

3. The method according to Claim 1, **characterized in that** the natural frequency of the vehicle body is ascertained on the basis of a time interval of detected maximum speeds of vibrations of the vehicle body.

4. The method according to one of Claims 1 to 3, **characterized in that** a parameter, which varies with various axle load states of a front axle and a rear axle of the vehicle, is ascertained.

5. The method according to Claim 1, **characterized in that** the parameter, which varies with various axle load states of an axle of the vehicle, is ascertained on the basis of a detected height position value of the vehicle body relative to the suspension.

6. An electronically regulated damping system in a vehicle, in particular a motor vehicle, which has at least one vibration damper having an electronically variable actuator for setting a damping behavior of the vibration damper on at least one wheel suspension of the vehicle and a control and regulating unit, which is operationally linked to the actuator, for controlling/ regulating the damping behavior of the variable vibration damper, **characterized in that** it is equipped with a parameter ascertainment unit for ascertaining a parameter, which varies with various axle load states of the vehicle, on the basis of a natural frequency of vibrations of the vehicle body.

7. An electronically regulated damping system according to Claim 6, **characterized in that** the parameter ascertainment unit for ascertaining a parameter, which varies with various axle load states of the vehicle, is integrated in the control and regulating unit of the damping system.

8. A vehicle, in particular a motor vehicle, which is equipped with an electronically regulated damping system according to one of Claims 6 to 7.

**Revendications**

1. Procédés pour la régulation en fonction de la charge à l'essieu d'un système d'amortissement à régulation électronique dans un véhicule, en particulier un véhicule à moteur, qui comprend au moins un amortisseur de vibrations avec un organe d'actionnement à régulation électronique pour le réglage du comportement d'amortissement d'un amortisseur de vibrations sur au moins une suspension de roue du véhicule et une unité de commande et de régulation en liaison active avec l'organe d'actionnement pour la commande et la régulation du comportement d'amortissement de l'amortisseur de vibrations réglable, qui comprend les étapes de :

   - détermination d'au moins une grandeur caractéristique variant avec différents états de charge à l'essieu d'un essieu du véhicule,
   - détermination d'une grandeur de réglage pour l'organe d'actionnement de l'amortisseur de vibrations sur la base de la grandeur caractéristique,
   - transmission de la grandeur de réglage à l'organe d'actionnement de l'amortisseur de vibrations pour régler un comportement d'amortissement de l'amortisseur de vibrations, **caractérisé en ce que** la grandeur caractéristique variant avec différents états de charge à l'essieu du véhicule est déterminée sur la base de la fréquence propre de vibrations de la superstructure du véhicule.

2. Procédé selon la revendication 1, **caractérisé en ce que** la fréquence propre de la superstructure du véhicule est déterminée sur la base d'un écart dans le temps entre des amplitudes de vibration maximales captées de la superstructure du véhicule.

3. Procédé selon la revendication 1, **caractérisé en ce que** la fréquence propre de la superstructure du véhicule est déterminée sur la base d'un écart dans le temps entre des vitesses maximales captées de vibrations de la superstructure du véhicule.

4. Procédé selon l'une des revendications 1 à 3, **caractérisé en ce qu'**une grandeur caractéristique variant avec différents états de charge à l'essieu d'un essieu avant et d'un essieu arrière du véhicule est déterminée.

5. Procédé selon la revendication 1, **caractérisé en ce que** la grandeur caractéristique variant avec différents états de charge à l'essieu d'un essieu du véhicule est déterminée sur la base d'une valeur de hauteur captée de la superstructure du véhicule par rapport au châssis.

6. Système d'amortissement à régulation électronique dans un véhicule, en particulier un véhicule à moteur, qui comprend au moins un amortisseur de vibrations avec un organe d'actionnement à régulation électronique pour le réglage d'un comportement d'amortissement de l'amortisseur de vibrations sur au moins une suspension de roue du véhicule et avec une unité de commande et de régulation en liaison active avec l'organe d'actionnement pour la commande et la régulation du comportement d'amortissement de l'amortisseur de vibrations réglable, **caractérisé en ce qu'**il est équipé d'une unité de détermination de grandeur caractéristique pour la détermination d'une grandeur caractéristique variant avec différents états de charge à l'essieu du véhicule sur la base d'une fréquence propre de vibrations de la superstructure du véhicule.

7. Système d'amortissement à régulation électronique selon la revendication 6, **caractérisé en ce que** le dispositif de détermination de la grandeur caractéristique pour la détermination d'une grandeur caractéristique variant avec différents états de charge à l'essieu du véhicule est intégré dans l'unité de commande et de régulation du système d'amortissement.

8. Véhicule, en particulier véhicule à moteur, équipé d'un système d'amortissement à régulation électronique selon l'une des revendications 6 à 7.

**FIG. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19640820 A